# EUROPÄISCHE PATENTANMELDUNG

(11) **EP 3 021 220 A1**
(43) Veröffentlichungstag der Anmeldung: **18.05.2016**
(21) Anmeldenummer: 14193468.7
(22) Anmeldetag: 17.11.2014
(51) Int. Cl.: G06F 9/455

(54) **Verfahren und Computer zum Zugriff eines Echtzeit-Betriebssystems auf einen AHCI-Controller**

(71) Anmelder: Siemens Aktiengesellschaft, 80333 München (DE)
(72) Erfinder: Hornung, Peter, 91054 Erlangen (DE); Miksch, Matthias, 91334 Hemhofen (DE)

(57) **Zusammenfassung**

Die Erfindung betrifft ein Verfahren und einen Computer zum Zugriff eines Echtzeit-Betriebssystems auf einen AHCI-Controller eines Computers mit mehreren Prozessorkernen, wobei die Betriebssysteme in jeweils einer virtuellen Laufzeitumgebung ausgeführt werden. Dabei wird eine Virtualisierungssteuerung des Computers mit einer Treibereinrichtung zum Zugriff auf den AHCI-Controller der Computer-Hardware ausgestaltet, wobei eine Virtualisierungssteuerung des Computers mit einer Treibereinrichtung zum Zugriff auf den AHCI-Controller der Computer-Hardware ausgestaltet wird, wobei diese Treibereinrichtung zur Ausführung auf einem anderen als dem zumindest einen exklusiv der virtuellen Maschine mit dem Echtzeit-Betriebssystem zugewiesenen der Prozessorkerne vorgesehen wird, wobei das Echtzeit-Betriebssystem zum Austausch von Befehlen und Daten mit der Treibereinrichtung eingerichtet wird, wobei der AHCI-Controller der Computer-Hardware derart konfiguriert wird, dass von diesem ausgelöste Interrupts an die Treibereinrichtung nur zur Unterbrechung des anderen der Prozessorkerne vorgesehen sind, und wobei die vom AHCI-Controller bereitgestellten Nutzdaten mittels der Treibereinrichtung und von dieser dem Echtzeit-Betriebssystem zum Abruf bereitgestellt werden. Durch dieses Verfahren kann das Echtzeit-Betriebssystem ohne Aussprünge (VM-Exits) in die auf einen Massenspeicher zugreifen, wobei die Echtzeitfähigkeit dieses Echtzeit-Betriebssystems nicht beeinträchtigt wird.

## Beschreibung

Die Erfindung betrifft ein Verfahren eines Echtzeit-Betriebssystems auf einen AHCI-Controller eines Computers mit mehreren Prozessorkernen gemäß dem Oberbegriff des Patentanspruchs 1, und einen Computer mit einem AHCI-Controller, mehreren Prozessor-Kernen und einem Echtzeit-Betriebssystem gemäß dem Oberbegriff des Patentanspruchs 12.

In der Datenverarbeitungstechnik ist die Virtualisierungstechnik ein gebräuchliches Mittel, um Zugriffe von Computerprogrammen, insbesondere von Betriebssystemen, auf Hardware zu kontrollieren und mehrere Prozesse, insbesondere Betriebssysteme und deren Anwendungen, voneinander zu kapseln. Insbesondere ist es möglich, mehrere sogenannte virtuelle Maschinen auf ein- und derselben Computer-Hardware zu installieren und parallel oder quasi-parallel zu betreiben. Üblicherweise ist dabei eine Virtualisierungssteuerung, oft auch als Hypervisor oder Virtual-Machine-Monitor bezeichnet, vorhanden, um die verschiedenen virtuellen Maschinen bereitzustellen und die Hardware-Zugriffe der verschiedenen virtuellen Maschinen bzw. der darin beheimateten "Gäste" (in der Regel Betriebssysteme) zu kontrollieren. Die letztgenannte Kontrolle kann zum einen in einer reinen Überwachung bestehen, zum anderen aber auch so ausgestaltet sein, dass die Virtualisierungssteuerung stellvertretend für die "Gäste" die Hardware-Zugriffe vollzieht. Dies ist insbesondere dann wichtig, wenn aus den verschiedenen virtuellen Maschinen konkurrierende Hardware-Zugriffe zu erwarten sind.

Die Virtualisierungstechnologie wird oft auch in den Fällen verwendet, in denen eine speicherprogrammierbare Steuerung (PLC) mittels einer gebräuchlichen Computer-Hardware, beispielsweise mittels eines Personal-Computers, ausgeführt bzw. nachgebildet werden soll. Solche "Soft-PLCs" (Software-Programable-Logic-Controller) laufen üblicherweise unter der Kontrolle eines sogenannten Echtzeit-Betriebssystems (RTOS = Real-Time Operating System), was beispielsweise ein gebräuchliches Windows-Betriebssystem mit einer sogenannten Echtzeit-Erweiterung sein kann. Auf derselben Computer-Hardware kann dabei in einer weiteren virtuellen Maschine ein anderes Betriebssystem installiert sein und parallel betrieben werden, um beispielsweise andere Anwendungen wie Betriebsdaten-Analysen oder dergleichen durchzuführen, die nicht im Echtzeit-Modus abgearbeitet werden müssen. Ein solches, allgemeines Betriebssystem wird oft auch als GPOS (General-Purpose Operating System) bezeichnet. Idealerweise wird als Computer-Hardware ein sogenanntes Multiprozessor- oder Multicore-System (Multikernarchitektur) verwendet, wobei es möglich ist, einen Prozessor oder Prozessorkern oder sogar mehrere Prozessorkerne exklusiv für das Echtzeit-Betriebssystem zu reservieren, so dass der Ablauf des allgemeinen Betriebssystems (GPOS) das Echtzeit-Betriebssystem und die darin beispielsweise ablaufende "Soft-PLC" nicht stört.

Eine Störung des Ablaufs eines Echtzeit-Betriebssystems bzw. der darin ablaufenden Anwendung (beispielsweise Soft-PLC) kann insbesondere dann vorkommen, wenn der Ausführungskontext des Betriebssystems bedingt durch ein externes Ereignis, beispielsweise einen Interrupt, verlassen werden muss und die Ausführung in die Virtualisierungssteuerung verzweigen muss; man spricht dabei von einem sogenannten "VM-Exit". Zwar kann es im Ausführungszyklus einer als Software nachgebildeten speicherprogrammierbaren Steuerung durchaus Perioden geben, in denen eine solche Unterbrechung unkritisch ist, aber ein "externer" Interrupt kann oft nicht vorhergesehen und damit oft nicht in das Ausführungsraster der Anwendung eingeplant werden. Ein solcher Interrupt und damit ein möglicherweise störender Aussprung in die Virtualisierungssteuerung ist möglich und sogar wahrscheinlich, wenn eine interruptgesteuerte Hardware der Computer-Plattform durch das Echtzeit-Betriebssystem verwendet wird. Insbesondere treten solche Interrupts bei der Verwendung von AHCI-Controllern auf. Solche AHCI-Controller werden für den Hardware-Zugriff auf Massenspeicher, insbesondere auf Festplatten, eingesetzt. Die üblichen Treiber von Betriebssystemen, die dem Zugriff auf AHCI-Controller dienen, sind üblicherweise interruptgesteuert, was bedeutet, dass beim Vorliegen von Nutzdaten für das Betriebssystem ein solcher Interrupt ausgelöst wird und dazu führt, dass eine unter der Kontrolle des jeweiligen Betriebssystems ausgeführte Anwendung unterbrochen wird. Dies kann bei Echtzeitanwendungen ungewünschte Folgen haben.

Damit sich die Zugriffe unterschiedlicher "Gäste" der verschiedenen virtuellen Maschinen nicht gegenseitig stören, dürfen diese nicht direkt auf die "echte" Hardware zugreifen, sondern die Virtualisierungssteuerung muss den AHCI-Controller für jedes Gast-Betriebssystem bzw. für jede virtuelle Maschine "virtualisieren", das heißt, die Funktionalität des AHCI-Controllers nachbilden. Wie erwähnt, besteht dabei bei einem echtzeitfähigen Betriebssystem als "Gast" die Schwierigkeit, dass diese Virtualisierung das Echtzeitverhalten nicht negativ beeinflussen darf, insbesondere dürfen keine "VM-Exits" auf dem Prozessorkern bzw. den Prozessorkernen der virtuellen Maschine mit dem Echtzeitbetriebssystem auftreten. Bei einer gebräuchlichen "Virtualisierung" des Zugriffs auf den Massenspeicher, hier des AHCI-Controllers, analog zu dem bei dem Zugriff auf IDE-Controller üblichen Virtualisierungstechniken werden die Zugriffe der "Gäste" auf den AHCI-Controller überwacht, was bei jedem Zugriff zu sogenannten "VM-Exits" auch bei einem Echtzeit-Betriebssystem führt und damit die Echtzeitfähigkeit negativ beeinflusst.

Es ist also eine Aufgabe der vorliegenden Erfindung, eine Softwarearchitektur vorzuschlagen, mit der ein Echtzeit-Betriebssystem konkurrierend mit anderen Betriebssystemen auf einen AHCI-Controller zugreifen kann, ohne dass die Echtzeitfähigkeit des Echtzeit-Betriebssystems negativ beeinflusst wird.

Die Lösung dieser Aufgabe sieht im Kern vor, dass die Virtualisierung des AHCI-Controllers für das Echtzeit-Betriebssystem (RTOS) und die anderen Betriebssysteme (GPOS) unterschiedlich gelöst werden. Für die allgemeinen Betriebssysteme wird der AHCI-Controller voll-virtualisiert, d.h., dass die Zugriffe des jeweiligen "Gastes" auf die Register des AHCI-Controllers abgefangen und dem "Gast" die Reaktion eines echten AHCI-Controllers "emuliert" wird. Die dabei auftretenden "VM-Exits" nimmt man hier in Kauf, da bei den allgemeinen Betriebssystemen auf kein Echtzeitverhalten Rücksicht genommen werden muss.

Da bei einem Echtzeit-Betriebssystem zur Vermeidung von "VM-Exits" eine Speicherüberwachung nicht aktiviert werden sollte, wird dem Echtzeit-Betriebssystem durch die Virtualisierungssteuerung (Virtual Machine Monitor; Hypervisor) eine paravirtualisierte AHCI-Schnittstelle angeboten. Diese ermöglicht es dem Echtzeit-Betriebssystem, die für einen Massenspeicherzugriff abgelegten Auftragsdaten freizugeben.

Über ein Nachrichtensystem, beispielsweise eine sogenannte "Message Box" in einem "shared memory", kann dann das Echtzeit-Betriebssystem die Virtualisierungssteuerung darüber informieren, dass solche Auftragsdaten vorliegen. Die Virtualisierungssteuerung leitet dann den Zugriffsversuch an einen eigenen AHCI-Treiber (im Folgenden als "Treibereinrichtung" bezeichnet) weiter, die auf einem Prozessorkern abläuft, der am Ablauf des Echtzeit-Betriebssystems nicht beteiligt ist, so dass dessen Benutzung die Echtzeitfähigkeit des genannten Betriebssystems auch nicht beeinflussen kann. Die AHCI-Treibereinrichtung liest dann die Auftragsdaten aus dem gemeinsam genutzten Speicher oder dergleichen aus und startet dann den Zugriff auf den "echten" AHCI-Controller, also die tatsächliche Hardware. Nach Abarbeitung dieses Auftrages gibt es eine Rückmeldung des AHCI-Controllers in Form eines Interrupts. Dieser ist jedoch entgegen der Verwendungsweise im Stand der Technik nicht an die virtuelle Maschine mit dem Echtzeit-Betriebssystem gerichtet, sondern wird von dem AHCI-Treiber (Treibereinrichtung) der Virtualisierungssteuerung verarbeitet, die - wie erwähnt - auf einem anderen Prozessorkern abläuft, als das Echtzeit-Betriebssystem. Von dort wird die Rückmeldung an den "Gast", der den Massenspeicherzugriff initiiert hatte, zurückgemeldet, was je nach Konfiguration durch einen (maskierbaren) Interrupt oder auf eine andere, nicht störende Weise geschehen kann.

Die Aufgabe wird insbesondere durch ein Verfahren gemäß dem Patentanspruch 1 und durch einen Computer gemäß dem Patentanspruch 12 gelöst.

Dabei wird ein Verfahren zum Zugriff eines Echtzeit-Betriebssystems auf einen AHCI-Controller eines Computers mit mehreren Prozessorkernen vorgeschlagen, wobei das Echtzeitbetriebssystem und ein weiteres Betriebssystem in jeweils einer virtuellen Laufzeitumgebung ausgeführt werden, und wobei zumindest der virtuellen Laufzeitumgebung mit dem Echtzeit-Betriebssystem zumindest einer der Prozessorkerne zur exklusiven Nutzung zugeordnet ist. Dabei wird eine Virtualisierungssteuerung des Computers mit einer Treibereinrichtung zum Zugriff auf den AHCI-Controller der Computer-Hardware ausgestaltet, wobei diese Treibereinrichtung zur Ausführung auf einem anderen als dem zumindest einen exklusiv der virtuellen Maschine mit dem Echtzeit-Betriebssystem zugewiesenen der Prozessorkerne vorgesehen wird, wobei das Echtzeit-Betriebssystem zum Austausch von Befehlen und Daten mit der Treibereinrichtung eingerichtet wird, wobei der AHCI-Controller der Computer-Hardware derart konfiguriert wird, dass von diesem ausgelöste Interrupts an die Treibereinrichtung nur zur Unterbrechung des anderen der Prozessorkerne vorgesehen sind, und wobei die vom AHCI-Controller bereitgestellten Nutzdaten mittels der Treibereinrichtung und von dieser dem Echtzeit-Betriebssystem zum Abruf bereitgestellt werden. Durch dieses Verfahren kann das Echtzeit-Betriebssystem ohne Aussprünge (VM-Exits) in die Virtualisierungssteuerung und ohne einen ungewollten "Interrupt" auf den AHCI-Controller und damit auf einen Massenspeicher zugreifen, wobei die Echtzeitfähigkeit dieses Echtzeit-Betriebssystems nicht beeinträchtigt wird.

Die Lösung der Aufgabe sieht außerdem einen Computer mit einem AHCI-Controller, mehreren Prozessor-Kernen und einem Echtzeit-Betriebssystem vor, wobei der Computer für den Zugriff des Echtzeit-Betriebssystems auf den AHCI-Controller zur Verwendung des vorstehend beschriebenen Verfahrens eingerichtet ist. Damit lassen sich die anhand des Verfahrens diskutierten Vorteile realisieren.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße Vorrichtung, also den erfindungsgemäßen Computer. Die beschriebenen Ausgestaltungen und Vorteile können sowohl einzeln, als auch in freier Kombination miteinander realisiert werden.

Zur Konfiguration des Echtzeit-Betriebssystems und/oder zur Bereitstellung der für den Zugriff erforderlichen Befehle und Daten wird vorteilhaft mittels der Virtualisierungssteuerung ein paravirtualisierter AHCI-Controller vorgesehen. Dieser kann zum einen bewirken, dass bereits bei der Installation des Echtzeit-Betriebssystems dieses passend konfiguriert wird, also ein solcher lokaler Treiber geladen wird, der zur Ausführung des erfindungsgemäßen Verfahrens eingerichtet ist. Zum anderen können durch den paravirtualierten AHCI-Controller Steuerungsinformationen über die Auftragsdaten verwaltet werden. Dabei wird als Nachrichten-Speichereinrichtung vorteilhaft ein reservierter Speicherbereich der Computer-Architektur verwendet, wobei dieser Speicherbereich durch das Echtzeit-Betriebssystem und durch die Treibereinrichtung der Virtualisierungssteuerung zumindest wechselweise oder sogar gleichzeitig zugreifbar ist.

Für eine Benachrichtigung der Treibereinrichtung über in der Nachrichten-Speichereinrichtung bereitstehende Befehle oder Aufträge des Echtzeit-Betriebssystems wird vorteilhaft eine Benachrichtigungseinrichtung, insbesondere ein Interrupt-Controller des Computers oder dafür reservierte Speicherzellen, sogenannte Flags, oder eine sog. "Message Box" in gemeinsam genutztem Speicher ("shared memory") verwendet werden.

Umgekehrt wird vorteilhaft auch die Bereitstellung von Daten, insbesondere von Nutzdaten, die von dem AHCI-Controller aus dem Massenspeicher gelesen wurden, dem Echtzeit-Betriebssystem signalisiert, so dass dieses, angepasst auf den eigenen Verarbeitungszyklus und somit nicht-störend, die bereitgestellten Daten auslesen kann. Vorteilhaft kann sich die Signalisierung eines sogenannten maskierbaren Interrupts bedienen, also eines solchen, dessen Verarbeitung durch das Echtzeit-Betriebssystem kontrolliert werden kann. In anderen vorteilhaften Ausgestaltungen wird die Nachricht asynchron übermittelt, also beispielsweise durch Benachrichtigungsregister, reservierte Speicherzellen, "Flags", Systemvariablen, sog. "Message Boxes" oder dergleichen. Vorteilhaft umfasst die Signalisierung an das Echtzeit-Betriebssystem die Manipulation von Speicherzellen des paravirtualisierten AHCI-Controllers, so dass bereits bei der Installation des Echtzeit-Betriebssystems bzw. des dortigen Treibers zum Zugriff auf den AHCI-Controller die Benachrichtigungsmethode und deren Parameter festgelegt werden können.

Für den Zugriff weiterer Betriebssysteme auf denselben AHCI-Controller der Computer-Hardware wird vorteilhaft mittels der Virtualisierungssteuerung ein weiterer, voll virtualisierter AHCI-Controller bereitgestellt, so dass die Zugriffe der allgemeinen Betriebssysteme (GPOS) nicht direkt an den AHCI-Controller der Computer-Hardware gerichtet werden. Dabei wird der vollvirtualisierte AHCI-Controller vorteilhaft zum Zugriff auf die Treibereinrichtung der Virtualisierungssteuerung konfiguriert, wobei dieselbe Treibereinrichtung gemeint ist, die auch für die Verarbeitung der AHCI-Controller-Zugriffe des Echtzeit-Betriebssystems vorgesehen ist. Dabei sollen alle Zugriffe der Betriebssysteme, nämlich der allgemeinen Betriebssysteme und des Echtzeit-Betriebssystems, auf den AHCI-Controller der Computer-Hardware durch diese Treibereinrichtung koordiniert werden. Vorteilhaft werden dabei die Zugriffe des Echtzeit-Betriebssystems priorisiert. Vorteilhaft wird zur Ausführung des vollvirtualisierten AHCI-Controllers ein anderer Prozessorkern verwendet, als derjenige oder diejenigen Prozessorkerne, die exklusiv für das Echtzeit-Betriebssystem reserviert sind.

Ein besonders vorteilhafter Anwendungsfall des vorgeschlagenen Verfahrens und des vorgeschlagenen Computers ist gegeben, wenn als ein Anwendungsprogramm des Echtzeit-Betriebssystems eine als Software ausgestaltete speicherprogrammierbare Steuerung ("Soft-SPS") verwendet wird und/oder wenn als das Echtzeit-Betriebssystem ein mit einer Echtzeit-Erweiterung versehenes Standard-Betriebssystem, z. B. Microsoft-Windows mit der Erweiterung RTX des Herstellers Interval Zero, verwendet wird.

Ein Ausführungsbeispiel des erfindungsgemäßen Verfahrens wird nachfolgend anhand der Zeichnungen erläutert. Es dient gleichzeitig der Erläuterung eines erfindungsgemäßen Computers.

Dabei zeigen:
- Figur 1: vereinfacht in schematischer Weise die Architektur eines erfindungsgemäßen Computers mit einer schematischen Darstellung der Etablierung eines Massenspeicherzugriffs durch ein Echtzeit-Betriebssystem,
- Figur 2: in schematischer Weise die Signalisierung des Resultats des Massenspeicherzugriffs, und
- Figur 3: in schematischer Weise die Initiierung eines Zugriffs auf den Massenspeicher durch ein allgemeines Betriebssystem.

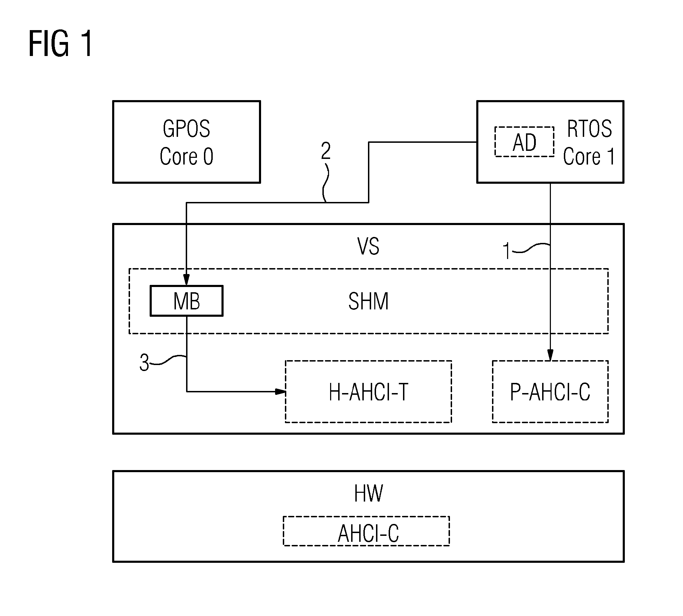

In der Figur 1 ist schematisch die Initiierung eines Massenspeicherzugriffs mittels des AHCI-Controllers AHCI-C einer Computer-Hardware HW (beispielsweise eine PC-Hardware) gezeigt; der Zugriff wird dabei durch das Echtzeit-Betriebssystem RTOS initiiert. Dabei wird vereinfacht angenommen, dass ein allgemeines Betriebssystem GPOS auf einem ersten Prozessorkern Core 0 der Computer-Hardware HW abläuft, während ein Echtzeit-Betriebssystem RTOS auf einem Prozessorkern Core 1 installiert ist und dort ausgeführt wird. Beide Betriebssysteme GPOS, RTOS laufen jeweils in einer eigenen virtuellen Maschine, wobei die virtuellen Maschinen durch eine Virtualisierungssteuerung VS (Hypervisor; Virtual Machine Monitor VMM) verwaltet werden. Die Virtualisierungssteuerung Hypervisor weist dabei ein gemeinsam genutzten Speicherbereich für alle Prozessorkerne, sogenannten "shared memory" auf. Die Virtualisierungssteuerung VS umfasst zum einen eine Treibereinrichtung H-AHCI-T (Hypervisor AHCI Treiber) zum Zusammenwirken mit dem AHCI-Controller AHCI-C der Computer-Hardware HW, und zum anderen einen paravirtualisierten AHCI-Controller P-AHCI-C zum Zusammenwirken mit einer entsprechenden Treibereinrichtung (nicht dargestellt) des Echtzeit-Betriebssystems RTOS.

Die Virtualisierungssteuerung VS ist vorteilhaft so ausgestaltet, dass sowohl der Hypervisor AHCI-Treiber H-AHCI-T, also die Treibereinrichtung zum Zugriff auf den AHCI-Controller AHCI-C, als auch wesentliche Software-Bestandteile der Virtualisierungssteuerung VS selbst auf dem Prozessorkern Core 0 ausgeführt werden, also bei ihrer Abarbeitung keine Rechenzeit und dergleichen des Prozessorkerns Core 1 mit dem Echtzeit-Betriebssystem RTOS beanspruchen.

Zunächst erzeugt das Echtzeit-Betriebssystem RTOS Auftragsdaten AD mit allen für einen Massenspeicherzugriff relevanten Informationen, legt diese im Arbeitsspeicher der Hardware HW ab und erzeugt zu dem dazu verwendeten Speicherbereich, der fortan auch als "Pufferspeicher" bezeichnet wird, einen Zeiger (Verweis, "Pointer"). Dabei können in einem System mehrere Aufträge mit mehreren Pufferspeicher-Bereichen gleichzeitig verwaltet werden; im vorliegenden Beispiel soll aus Gründen der Vereinfachung von nur einem Pufferspeicher ausgegangen werden.

In einem ersten Schritt 1 hinterlegt das Echtzeit-Betriebssystem RTOS bzw. der dortige AHCI-Treiber in dem paravirtualisierten AHCI-Controller, der als Speicherstruktur betrachtet werden kann, eine Information darüber, dass der zuvor konfigurierte Pufferspeicher-Bereich gültige Daten umfasst. In einem zweiten Schritt 2 hinterlegt das Echtzeit-Betriebssystem für die Treibereinreichung H-AHCI-T eine Information über das Vorhandensein von Auftragsdaten, wozu eine sogenannten "Message Box" verwendet wird, also ein Benachrichtigungsregister, welches durch den Prozessorkern Core 0 zugegriffen werden kann. Anschließend erfolgt ein nichtmaskierbarer Interrupt an den Prozessorkern Core 0, der einen Aussprung ("VM-Exit") des Prozessorkerns Core 0 erzwingt, wodurch die Ausführung des allgemeinen Betriebssystems GPOS unterbrochen und die Kontrolle an die Virtualisierungsssteuerung VS übergeben wird. Aufgrund der hinterlegten Nachricht wird die Treibereinrichtung H-AHCI-T aktiviert und liest aus dem paravirtualisierten AHCI-Treiber P-AHCI-T die Information darüber aus, dass valide Auftragsdaten an der Adresse des Zeigers (Pointers) bereitstehen.

Nun hat die Treibereinrichtung H-AHCI-T alle für den Hardware-Zugriff, also den Massenspeicherzugriff, erforderlichen Informationen und führt diesen genauso durch, wie es auch im Stand der Technik bei nicht-virtualisierten Betriebssystemen üblich ist. Während dessen kann das Echtzeit-Betriebssystem RTOS unbeeinflusst weiter ablaufen.

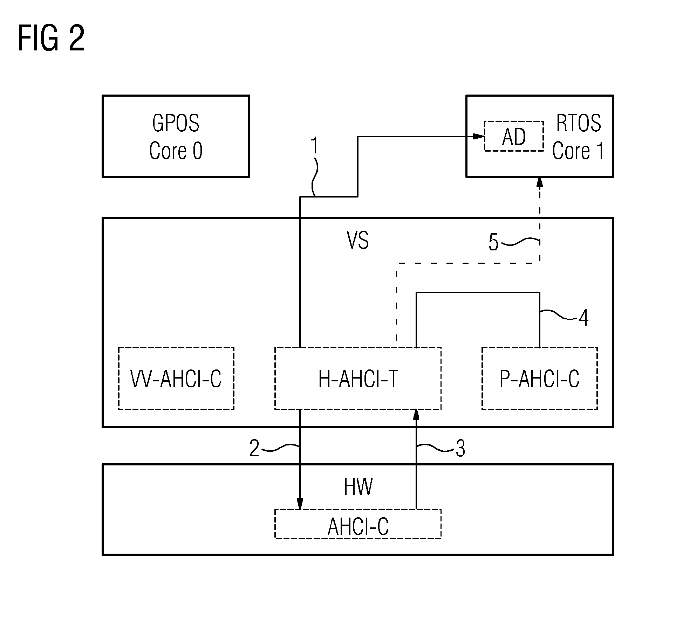

In der Figur 2 ist schematisch der Informationsfluss nach der Initiierung des vorstehend beschriebenen Auftrags dargestellt. Die Treibereinrichtung (Hypervisor AHCI-Treiber) liest die Auftragsdaten direkt aus dem Pufferspeicher aus (Schritt 1), der dem Auftrag zugeordnet ist. Daraus werden durch die Treibereinrichtung H-AHCI-T entsprechende Befehle bzw. Registerzugriffe (Schritt 2) erzeugt und als Auftragsstart an den AHCI-Controller AHCI-C der Computer-Hardware HW übermittelt. Nach erfolgtem Massenspeicherzugriff gibt der AHCI-Controller AHCI-C eine Rückmeldung an die Treibereinrichtung H-AHCI-T (Schritt 3), wozu beispielsweise ein Interrupt generiert wird, der an den Prozessorkern Core 0 gerichtet ist, auf welchem die Treibereinrichtung H-AHCI-T abläuft. Danach werden die Resultate, also die aktualisierten Auftragsdaten, in einem Pufferspeicher gespeichert, wobei in einem weiteren Schritt 4 der Verweis (Zeiger, Pointer) zu diesen Daten im paravirtualisierten AHCI-Controller P-AHCI-C gespeichert werden. Danach erfolgt (Schritt 5) eine Benachrichtigung an das Echtzeit-Betriebssystem RTOS über die Vollendung des Auftrags, wobei beispielsweise ein Interrupt mit einer niedrigen Priorität verwendet werden kann. Danach (nicht dargestellt) kann das Echtzeit-Betriebssystem die Resultate (aktualisierte Auftragsdaten) aus dem Pufferspeicher auslesen.

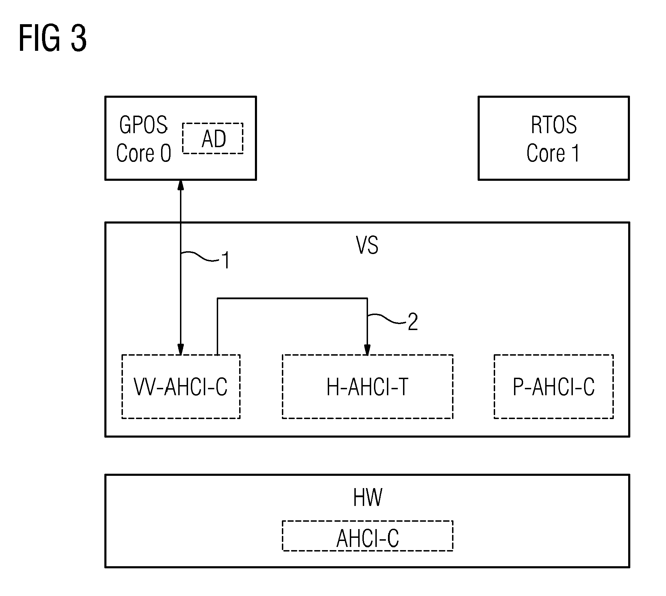

In der Figur 3 ist dargestellt, wie alternativ oder sogar gleichzeitig durch das allgemeine Betriebssystem GPOS ein Auftrag für einen Massenspeicherzugriff realisiert werden kann. Im Unterschied zu dem zuvor beschriebenen Fall des Zugriffs durch das Echtzeit-Betriebssystem RTOS kommuniziert dazu das allgemeine Betriebssystem GPOS (Schritt 1) direkt mit einem vollvirtualisierten AHCI-Controller VV-AHCI-C, dessen Software ebenfalls auf den Prozessorkern Core 0 abläuft. Diese Kommunikation kann interruptgesteuert erfolgen und überdies genauso erfolgen, wie auch in einem nicht-virtualisierten Fall im Stand der Technik üblich. Insbesondere kann das allgemeine Betriebssystem GPOS mit einem Standard-Treiber für AHCI-Controller-Zugriffe arbeiten, allerdings werden nicht die Register des tatsächlich vorhandenen AHCI-Controllers der Computer-Hardware beschrieben, sondern die Register des vollvirtualisierten AHCI-Controllers in der Virtualisierungssteuerung. Das kann dadurch geschehen, dass Zugriffe des Betriebssystems GPOS durch die Virtualisierungssteuerung VS abgefangen werden, was zu einem Aussprung (VM-Exit) des Prozessorkerns Core 0 führt. Im zweiten Schritt generiert der vollvirtualisierte AHCI-Controller VV-AHCI-C Nachrichten mit allen Informationen über den beabsichtigten Massenspeicherzugriff und übermittelt diese an den Hypervisor-AHCI-Treiber, der ebenfalls mittels des Prozessorkerns Core 0 abgearbeitet wird. Diese Treibereinrichtung H-AHCI-T führt dann den eigentlichen Hardware-Zugriff durch (nicht dargestellt), wobei der Informationsfluss nach Abschluss des Auftrages in Gegenrichtung erfolgt. Dabei kann der Abschluss des Auftrages wie im vorherigen Beispiel geschildert durch einen Interrupt von dem AHCI-Controller AHCI-C an die Treibereinrichtung H-AHCI-C (Hypervisor AHCI-Treiber) übermittelt werden, der wiederum den vollvirtualisieren AHCI-Controller VV-AHCI-C über den Abschluss des Auftrags informiert, wobei auch die Resultate zurückübermittelt werden oder zumindest ein Verweis, Pointer oder dergleichen zum Speicherort der Resultate mitgeliefert wird, wonach der vollvirtualisierte AHCI-Controller VV-AHCI-C seinerseits "seinen" Gast und damit das Betriebssystem GPOS über den Abschluss des Auftrags informiert und die Daten bereitstellt. Für die letztgenannte Information kann wiederum ein Interrupt verwendet werden.

Im letztgenannten Beispiel werden also die Zugriffe des Gastes, also des Betriebssystems GPOS, auf die Register des AHCI-Controllers AHCI-C abgefangen und dem Betriebssystem GPOS die Reaktion eines tatsächlich in Hardware HW vorhandenen AHCI-Controllers emuliert bzw. simuliert. Zum Start eines Massenspeicherzugriffs schreibt das Betriebssystem GPOS die Auftragsdaten in Speicherbereiche, die durch die AHCI-Schnittstellenbeschreibung definiert sind. Startet dann das Betriebssystem GPOS den Massenspeicherzugriff durch das Setzen von Bits in einem Register (AHCI-Register), erkennt dies die Virtualisierungssteuerung und leitet den Zugriff an seinen eigenen vollvirtualisierten Hypervisor-AHCI-Controller VV-AHCI-C weiter, der den gleichen Prozessorkern Core 0 benutzt, wie auch das Betriebssystem GPOS, und beeinflusst damit nicht den Prozessorkern Core 1 mit dem Echtzeit-Betriebssystem RTOS. Es könnte unter Beibehaltung des Konzepts auch ein weiterer Prozessorkern für die Treibereinrichtung H-AHCI-T benutzt werden, solange es kein Prozessorkern ist, der auch durch das Echtzeit-Betriebssystem RTOS benutzt wird.

## Patentansprüche

1. Verfahren zum Zugriff eines Echtzeit-Betriebssystems (RTOS) auf einen AHCI-Controller (AHCI-C) eines Computers (HW) mit mehreren Prozessorkernen (Core 0, Core 1),
wobei das Echtzeit-Betriebssystem (RTOS) und ein weiteres Betriebssystem (GPOS) in jeweils einer virtuellen Laufzeitumgebung ausgeführt werden, und
wobei zumindest der virtuellen Laufzeitumgebung mit dem Echtzeit-Betriebssystem (RTOS) zumindest einer der Prozessorkerne (Core 1) zur exklusiven Nutzung zugeordnet ist,
**dadurch gekennzeichnet,**
**dass** eine Virtualisierungssteuerung (VS) des Computers (HW) mit einer Treibereinrichtung (H-AHCI-T) zum Zugriff auf den AHCI-Controller (AHCI-C) ausgestattet wird, wobei diese Treibereinrichtung (H-AHCI-T) zur Ausführung auf einem anderen Prozessorkern (Core 0) als dem zumindest einen exklusiv der virtuellen Maschine mit dem Echtzeit-Betriebssystem (RTOS) zugewiesenen der Prozessorkerne (Core 1) vorgesehen wird, dass das Echtzeit-Betriebssystem (RTOS) zum Austausch von Befehlen und Daten mit der Treibereinrichtung (H-AHCI-T) eingerichtet wird,
**dass** der AHCI-Controller AHCI-C derart konfiguriert wird, dass von diesem ausgelöste Interrupts an die Treibereinrichtung (H-AHCI-T) nur zur Unterbrechung des anderen der Prozessorkerne (Core 0) vorgesehen sind, und
**dass** vom AHCI-Controller AHCI-C bereitgestellte Nutzdaten mittels der Treibereinrichtung (H-AHCI-T) dem Echtzeit-Betriebssystem zum Abruf bereitgestellt werden.

2. Verfahren nach Patentanspruch 1,
**dadurch gekennzeichnet,**
**dass** zur Konfiguration des Echtzeit-Betriebssystems (RTOS) und/oder zur Bereitstellung der für den Zugriff erforderlichen Befehle und Daten mittels der Virtualisierungssteuerung (VS) ein paravirtualisierter AHCI-Controller (P-AHCI-C) vorgesehen wird.

3. Verfahren nach einem der vorgehenden Patentansprüche, **dadurch gekennzeichnet,**
**dass** zur Initiierung des Zugriffs durch das Echtzeit-Betriebssystem (RTOS) eine Information in einem als Nachrichten-Speichereinrichtung (MB) reservierten Speicherbereich der Computer-Architektur hinterlegt wird, wobei dieser Speicherbereich durch das Echtzeit-Betriebssystem (RTOS) und durch die Treibereinrichtung (H-AHCI-T) zumindest wechselweise zugreifbar ist.

4. Verfahren nach einem der vorhergehenden Patentansprüche, **dadurch gekennzeichnet,**
**dass** für eine Benachrichtigung der Treibereinrichtung (H-AHCI-T) bereitstehende Befehle des Echtzeit-Betriebssystems (RTOS) eine Benachrichtigungseinrichtung, insbesondere ein Interrupt-Controller des Computers (HW), verwendet wird.

5. Verfahren nach einem der vorhergehenden Patentansprüche, **dadurch gekennzeichnet,**
**dass** die Bereitstellung von Daten des AHCI-Controllers (AHCI-C) für das Echtzeit-Betriebssystem (RTOS) an dieses signalisiert wird.

6. Verfahren nach Patentanspruch 5,
**dadurch gekennzeichnet,**
**dass** zur Signalisierung ein Interrupt, eine asynchron übermittelte Nachricht oder die Manipulation eines Flags in einer Speicherzelle oder einer Systemvariablen, verwendet wird.

7. Verfahren nach Patentanspruch 5 oder 6, sofern rückbezogen auf Patentanspruch 2,
**dadurch gekennzeichnet,**
**dass** die Signalisierung durch die Treibereinrichtung (H-AHCI-T) erfolgt.

8. Verfahren nach einem der vorhergehenden Patentansprüche, **dadurch gekennzeichnet,**
**dass** für den Zugriff des weiteren Betriebssystems (GPOS) auf den AHCI-Controller (AHCI-C) mittels der Virtualisierungssteuerung (VS) ein vollvirtualisierter AHCI-Controller (VV-AHCI-C) bereitgestellt wird.

9. Verfahren nach Patentanspruch 8,
**dadurch gekennzeichnet,**
**dass** der vollvirtualisierte AHCI-Controller (VV-AHCI-C) zum Zugriff auf die Treibereinrichtung (H-AHCI-T) der Virtualisierungssteuerung (VS) konfiguriert wird, wobei alle Zugriffe der Betriebssysteme (GPOS, RTOS)auf den AHCI-Controller AHCI-C der Computer-Hardware (HW) durch diese Treibereinrichtung (H-AHCI-T) koordiniert werden.

10. Verfahren nach Patentanspruch 8 oder 9,
**dadurch gekennzeichnet,**
**dass** zur Ausführung des vollvirtualisierten AHCI-Controllers (VV-AHCI-C) ein anderer Prozessorkern (Core 0) als der oder die für die exklusive Nutzung durch die virtuelle Laufzeitumgebung mit dem Echtzeit-Betriebssystem (RTOS) vorgesehenen der Prozessorkerne (Core 1) vorgesehen wird.

11. Verfahren nach einem der vorhergehenden Patentansprüche, **dadurch gekennzeichnet,**
**dass** als ein Anwendungsprogramm des Echtzeit-Betriebssystems (RTOS) eine als Software ausgestaltete speicherprogrammierbare Steuerung verwendet wird und/oder dass als das Echtzeit-Betriebssystem (RTOS) ein mit einer Echtzeit-Erweiterung versehenes Standard-Betriebssystem verwendet wird.

12. Computer mit einem AHCI-Controller (AHCI-C), mehreren Prozessor-Kernen (Core 0, Core 1) und zumindest einem Echtzeit-Betriebssystem (RTOS),
**dadurch gekennzeichnet,**
**dass** der Computer für den Zugriff des Echtzeit-Betriebssystems (RTOS) auf den AHCI-Controller (AHCI-C) zur Verwendung eines der vorstehend beschriebenen Verfahren eingerichtet ist.
